(19) Europäisches Patentamt

European Patent Office

Office européen des brevets

(11) **EP 4 332 963 A1**

(12) **EUROPEAN PATENT APPLICATION**

(43) Date of publication:
06.03.2024 Bulletin 2024/10

(21) Application number: 23190257.8

(22) Date of filing: 08.08.2023

(51) International Patent Classification (IPC):
*G10L 21/0232* (2013.01)        *H04M 9/08* (2006.01)

(52) Cooperative Patent Classification (CPC):
**H04M 9/082;** G10L 21/0208; G10L 2021/02082

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 US 202217898894**

(71) Applicant: **Nokia Technologies Oy
02610 Espoo (FI)**

(72) Inventors:
• **NUZMAN, Carl
Union, NJ (US)**
• **LANNEER, Wouter
Antwerp (BE)**

(74) Representative: **Nokia EPO representatives
Nokia Technologies Oy
Karakaari 7
02610 Espoo (FI)**

(54) **ADAPTIVE ECHO CANCELLATION**

(57)     A method, apparatus and computer readable medium provide for adaptive filtering. In a method, an audio signal is received based on near-end signals and reproduced far-end signals. The far-end signals are reproduced by one or more loudspeakers. The method also obtains a first set of one or more subband sequences based on the far-end signals and a a second set of one or more subband sequences based on the near-end signals. The method applies a first subband filter that includes a set of coefficients to a respective subband of the first set of one or more subband sequences to produce one or more filtered far-end subband sequences with a reduced time correlation. The method also processes the one or more filtered far-end subband sequences using a second subband filter to predict the second set of one or more subband sequences, wherein the second subband filter comprises the adaptive filter.

**Description**

TECHNOLOGICAL FIELD

An example embodiment relates to two-way audio systems, and more particularly, to a method, apparatus, and computer readable medium for echo cancellation within these systems.

BACKGROUND

A two-way audio system in which speakers and microphones are not physically isolated benefits from echo cancellation to prevent the far-end signal produced by the speakers from feeding back into the far end via the microphones. Some examples of two-way audio systems are speakerphones on mobile devices or speakerphone systems for conference rooms. While these systems are in wide use today, additional use cases, such as spatial audio and immersive experiences, also experience comparable issues relating to audio feedback.

Acoustic echo impulse responses can be long (e.g., 0.2 s) when compared with the sampling rate of modern, high quality audio systems (e.g., 48 kHZ). Because of this relationship, time-domain filter implementations can have an especially high complexity (e.g., requiring thousands of taps). For this reason, echo cancellation filters are typically implemented via frequency-domain techniques such as a partitioned block frequency domain adaptive filter (PB-FDAF) and/or a weighted overlap-add (WOLA) filter, which take advantage of the low complexity of the fast Fourier Transform.

SUMMARY

In an example embodiment, a method is provided for adaptive filtering with an adaptive filter. The method includes receiving an audio signal based on, at least in part, near-end signals and reproduced far-end signals. The far-end signals are reproduced by one or more loudspeakers and, as such, may be one or more loudspeaker input signals. The method also obtains a first set of one or more subband sequences based on the far-end signals and obtains a second set of one or more subband sequences based on the near-end signals. The method additionally includes applying a first subband filter, such as an infinite impulse response whitening filter, that includes a set of coefficients to a respective subband of the first set of one or more subband sequences to produce one or more filtered far-end subband sequences with a reduced time correlation. The method further includes processing the one or more filtered far-end subband sequences using a second subband filter to predict the second set of one or more subband sequences. The second subband filter includes the adaptive filter.

The coefficients of the first subband filter associated with a first subband of the first set of one or more subband sequences may be different than the coefficients of the first subband filter associated with a second subband of the first set of one or more subband sequences. In an example embodiment, the first and second sets of one or more subband sequences are obtained from the far-end signals and the near-end signals, respectively, using a Short-Time Fourier Transform. The coefficients of the first subband filter of an example embodiment depend on an oversampling factor. In an example embodiment, the second subband filter is configured to implement a Normalized Least Mean Square algorithm.

In regards to applying the first subband filter including the set of coefficients to the respective subband of the first set of one or more subband sequences to produce one or more filtered far-end subband sequences, the method of an example embodiment includes calculating a systematic correlation for the respective subband that would occur in an instance that the one or more far-end subband sequences have a specified correlation function. The method of this example embodiment also includes calculating a set of coefficients of the first subband filter that would reduce the systematic correlation for the respective subband of the first set of one or more subband sequences. The method of this example embodiment further includes applying the set of coefficients of the first subband filter to respective subbands of the first set of one or more subband sequences to produce the one or more filtered far-end subband sequences.

The set of coefficients are calculated in an example embodiment using one or more of an oversampling factor, a Fast Fourier Transform size used by a Short-Time Fourier Transform, a hop size used by the Short-Time Fourier Transform, or one or more coefficients of an analysis window used by the Short-Time Fourier Transform. The application of a first subband filter that includes a set of coefficients to a respective subband of the first set of one or more subband sequences to produce one or more filtered far-end subband sequences may occur in real-time. In an example embodiment, the method also includes applying another first subband filter to a respective subband of the second set of one or more subband sequences to produce one or more filtered near-end subband sequences with a reduced time correlation, and processing the one or more filtered far-end subband sequences using the second subband filter to predict the one or more filtered near-end subband sequences.

The method of an example embodiment also includes processing the first set of one or more subband sequences by the second subband filter without the application of the first subband filter in an instance in which a value associated with current echo return loss enhancement levels satisfies a first threshold. In this example embodiment, applying the first subband filter and processing the one or more filtered far-end subband sequences are dependent upon the value associated with current echo return loss enhancement satisfying a second threshold. In an example embodiment, obtaining a first set of one or more subband sequences includes applying at least one filter to the one or more far end signals and then downsampling a filtered representation of the one or more far end signals to generate the first set of one or more subband sequences based on the far end signals.

In another example embodiment, an apparatus is provided that is configured to provide adaptive filtering with an adaptive filter. The apparatus includes at least one processor and at least one memory including computer program code. The at least one memory and the computer program code are configured to, with the at least one processor, cause the apparatus to receive an audio signal based on, at least in part, near-end signals and reproduced far-end signals. The far-end signals are reproduced by one or more loudspeakers and, as such, may be one or more loudspeaker input signals. The at least one memory and the computer program code are also configured to, with the at least one processor, cause the apparatus to obtain a first set of one or more subband sequences based on the far-end signals and to obtain a second set of one or more subband sequences based on the near-end signals. The at least one memory and the computer program code are additionally configured to, with the at least one processor, cause the apparatus to apply a first subband filter, such as an infinite impulse response whitening filter, that includes a set of coefficients to a respective subband of the first set of one or more subband sequences to produce one or more filtered far-end subband sequences with a reduced time correlation. The at least one memory and the computer program code are further configured to, with the at least one processor, cause the apparatus to process the one or more filtered far-end subband sequences using a second subband filter to predict the second set of one or more subband sequences. The second subband filter includes the adaptive filter.

The coefficients of the first subband filter associated with a first subband of the first set of one or more subband sequences may be different than the coefficients of the first subband filter associated with a second subband of the first set of one or more subband sequences. In an example embodiment, the first and second sets of one or more subband sequences are obtained from the far-end signals and the near-end signals, respectively, using a Short-Time Fourier Transform. The coefficients of the first subband filter of an example embodiment depend on an oversampling factor. In an example embodiment, the second subband filter is configured to implement a Normalized Least Mean Square algorithm.

In regards to applying the first subband filter including the set of coefficients to the respective subband of the first set of one or more subband sequences to produce one or more filtered far-end subband sequences, the at least one memory and the computer program code are configured to, with the at least one processor, cause the apparatus of an example embodiment to calculate a systematic correlation for the respective subband that would occur in an instance that the one or more far-end subband sequences have a specified correlation function. The at least one memory and the computer program code are also configured to, with the at least one processor, cause the apparatus of this example embodiment to calculate a set of coefficients of the first subband filter that would reduce the systematic correlation for the respective subband of the first set of one or more subband sequences. The at least one memory and the computer program code are further configured to, with the at least one processor, cause the apparatus of this example embodiment to apply the set of coefficients of the first subband filter to respective subbands of the first set of one or more subband sequences to produce the one or more filtered far-end subband sequences.

The set of coefficients are calculated in an example embodiment using one or more of an oversampling factor, a Fast Fourier Transform size used by a Short-Time Fourier Transform, a hop size used by the Short-Time Fourier Transform, or one or more coefficients of an analysis window used by the Short-Time Fourier Transform. The application of a first subband filter that includes a set of coefficients to a respective subband of the first set of one or more subband sequences to produce one or more filtered far-end subband sequences may occur in real-time. In an example embodiment, the at least one memory and the computer program code are also configured to, with the at least one processor, cause the apparatus to apply another first subband filter to a respective subband of the second set of one or more subband sequences to produce one or more filtered near-end subband sequences with a reduced time correlation, and to process the one or more filtered far-end subband sequences using the second subband filter to predict the one or more filtered near-end subband sequences.

The at least one memory and the computer program code are also configured to, with the at least one processor, cause the apparatus of an example embodiment to process the first set of one or more subband sequences by the second subband filter without the application of the first subband filter in an instance in which a value associated with current echo return loss enhancement levels satisfies a first threshold. In this example embodiment, applying the first subband filter and processing the one or more filtered far-end subband sequences are dependent upon the value associated with current echo return loss enhancement satisfying a second threshold. In an example embodiment, the at least one memory and the computer program code are configured to, with the at least one processor, cause the apparatus to obtain a first set of one or more subband sequences by applying at least one filter to the one or more far end signals and then downsampling a filtered representation of the one or more far end signals to generate the first set of one or more subband sequences based on the far end signals.

In a further example embodiment, a non-transitory computer readable medium is provided that is configured to provide adaptive filtering with an adaptive filter. The computer readable medium includes program instructions stored thereon and configured to receive an audio signal based on, at least in part, near-end signals and reproduced far-end signals. The far-end signals are reproduced by one or more loudspeakers and, as such, may be one or more loudspeaker input signals. The computer readable medium also includes program instructions configured to obtain a first set of one or more subband sequences based on the far-end signals and program instructions configured to obtain a second set of one or more subband sequences based on the near-end signals. The computer readable medium additionally includes program instructions configured to apply a first subband filter, such as an infinite impulse response whitening filter, that includes a set of coefficients to a respective subband of the first set of one or more subband sequences to produce one or more filtered far-end subband sequences with a reduced time correlation. The computer readable medium further include program instructions configured to process the one or more filtered far-end subband sequences using a second subband filter to predict the second set of one or more subband sequences. The second subband filter includes the adaptive filter.

The coefficients of the first subband filter associated with a first subband of the first set of one or more subband sequences may be different than the coefficients of the first subband filter associated with a second subband of the first set of one or more subband sequences. In an example embodiment, the first and second sets of one or more subband sequences are obtained from the far-end signals and the near-end signals, respectively, using a Short-Time Fourier Transform. The coefficients of the first subband filter of an example embodiment depend on an oversampling factor. In an example embodiment, the second subband filter is configured to implement a Normalized Least Mean Square algorithm.

In regards to applying the first subband filter including the set of coefficients to the respective subband of the first set of one or more subband sequences to produce one or more filtered far-end subband sequences, the program instructions of an example embodiment are configured to calculate a systematic correlation for the respective subband that would occur in an instance that the one or more far-end subband sequences have a specified correlation function. The program instructions of this example embodiment are also configured to calculate a set of coefficients of the first subband filter that would reduce the systematic correlation for the respective subband of the first set of one or more subband sequences. The program instructions of this example embodiment are further configured to apply the set of coefficients of the first subband filter to respective subbands of the first set of one or more subband sequences to produce the one or more filtered far-end subband sequences.

The set of coefficients are calculated in an example embodiment using one or more of an oversampling factor, a Fast Fourier Transform size used by a Short-Time Fourier Transform, a hop size used by the Short-Time Fourier Transform, or one or more coefficients of an analysis window used by the Short-Time Fourier Transform. The application of a first subband filter that includes a set of coefficients to a respective subband of the first set of one or more subband sequences to produce one or more filtered far-end subband sequences may occur in real-time. In an example embodiment, the computer readable medium also includes program instructions configured to apply another first subband filter to a respective subband of the second set of one or more subband sequences to produce one or more filtered near-end subband sequences with a reduced time correlation, and program instructions configured to process the one or more filtered far-end subband sequences using the second subband filter to predict the one or more filtered near-end subband sequences.

The computer readable medium of an example embodiment also includes program instructions configured to process the first set of one or more subband sequences by the second subband filter without the application of the first subband filter in an instance in which a value associated with current echo return loss enhancement levels satisfies a first threshold. In this example embodiment, applying the first subband filter and processing the one or more filtered far-end subband sequences are dependent upon the value associated with current echo return loss enhancement satisfying a second threshold. In an example embodiment, the program instructions configured to obtain a first set of one or more subband sequences include program instructions configured to apply at least one filter to the one or more far end signals and program instructions to then downsample a filtered representation of the one or more far end signals to generate the first set of one or more subband sequences based on the far end signals.

In yet another example embodiment, an apparatus is provided that is configured to provide adaptive filtering with an adaptive filter. The apparatus includes means for receiving an audio signal based on, at least in part, near-end signals and reproduced far-end signals. The far-end signals are reproduced by one or more loudspeakers and, as such, may be one or more loudspeaker input signals. The apparatus also includes means for obtaining a first set of one or more subband sequences based on the far-end signals and means for obtaining a second set of one or more subband sequences based on the near-end signals. The apparatus additionally includes means for applying a first subband filter, such as an infinite impulse response whitening filter, comprising a set of coefficients to a respective subband of the first set of one or more subband sequences to produce one or more filtered far-end subband sequences with a reduced time correlation. The apparatus further includes means for processing the one or more filtered far-end subband sequences using a second subband filter to predict the second set of one or more subband sequences. The second subband filter includes the adaptive filter.

The coefficients of the first subband filter associated with a first subband of the first set of one or more subband sequences may be different than the coefficients of the first subband filter associated with a second subband of the first set of one or more subband sequences. In an example embodiment, the first and second sets of one or more subband sequences are obtained from the far-end signals and the near-end signals, respectively, using a Short-Time Fourier Transform. The coefficients of the first subband filter of an example embodiment depend on an oversampling factor. In an example embodiment, the second subband filter is configured to implement a Normalized Least Mean Square algorithm.

In regards to applying the first subband filter including the set of coefficients to the respective subband of the first set of one or more subband sequences to produce one or more filtered far-end subband sequences, the apparatus of an example embodiment includes means for calculating a systematic correlation for the respective subband that would occur in an instance that the one or more far-end subband sequences have a specified correlation function. The apparatus of this example embodiment also includes means for calculating a set of coefficients of the first subband filter that would reduce the systematic correlation for the respective subband of the first set of one or more subband sequences. The apparatus of this example embodiment further includes means for applying the set of coefficients of the first subband filter to respective subbands of the first set of one or more subband sequences to produce the one or more filtered far-end subband sequences.

The set of coefficients are calculated in an example embodiment using one or more of an oversampling factor, a Fast Fourier Transform size used by a Short-Time Fourier Transform, a hop size used by the Short-Time Fourier Transform, or one or more coefficients of an analysis window used by the Short-Time Fourier Transform. The application of a first subband filter that includes a set of coefficients to a respective subband of the first set of one or more subband sequences to produce one or more filtered far-end subband sequences may occur in real-time. In an example embodiment, the apparatus also includes means for applying another first subband filter to a respective subband of the second set of one or more subband sequences to produce one or more filtered near-end subband sequences with a reduced time correlation, and means for processing the one or more filtered far-end subband sequences using the second subband filter to predict the one or more filtered near-end subband sequences.

The apparatus of an example embodiment also includes means for processing the first set of one or more subband sequences by the second subband filter without the application of the first subband filter in an instance in which a value associated with current echo return loss enhancement levels satisfies a first threshold. In this example embodiment, the means for applying the first subband filter and the means for processing the one or more filtered far-end subband sequences are dependent upon the value associated with current echo return loss enhancement satisfying a second threshold. In an example embodiment, the means for obtaining a first set of one or more subband sequences includes means for applying at least one filter to the one or more far end signals and means for then downsampling a filtered representation of the one or more far end signals to generate the first set of one or more subband sequences based on the far end signals.

BRIEF DESCRIPTION OF THE DRAWINGS

Reference will now be made to the accompanying drawings, which are not necessarily drawn to scale, and wherein:

FIG. 1. shows an example embodiment of a conventional acoustic echo cancellation system.
FIG. 2 depicts an example embodiment of a conventional WOLA-based adaptive echo cancellation system which performs independent adaption of respective subbands.
FIG. 3 shows an example embodiment of a WOLA-based adaptive filtering system for echo cancellation which performs per-subband whitening.
FIG. 4 depicts an example embodiment of a WOLA-based adaptive cancellation system in accordance with the present disclosure.
FIG. 5 depicts another example embodiment of a WOLA-based adaptive cancellation system in accordance with the present disclosure.
FIG. 6 shows a conventional implementation of a subband cancellation filter.
FIG. 7 shows an example embodiment of a subband cancellation filter according to the present disclosure.
FIG. 8 shows correlation functions for a first subband of a WOLA system with various oversampling factors.
FIG. 9 depicts echo return loss enhancement (ERLE) as a function of time in a particular subband of a WOLA-based echo cancellation system under various conditions.
FIG. 10A further depicts ERLE as a function of time for a WOLA echo cancellation system under various conditions.
FIG. 10B also depicts ERLE as a function of time for a WOLA echo cancellation system under other various conditions.

FIG. 11 is a block diagram of an apparatus that may be specifically configured in accordance with an example embodiment of the present disclosure.

FIG. 12 is a flowchart of operations that may be performed, such as by the apparatus of FIG. 11, in accordance with an example embodiment of the present disclosure.

DETAILED DESCRIPTION

Some embodiments of the present disclosure will now be described more fully hereinafter with reference to the accompanying drawings, in which some, but not all, embodiments are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device. Additionally, as used herein, the term 'module' refers to hardware or a combination of hardware and software in which the execution of the software directs operation of the hardware.

As used herein, the term "computer-readable medium" refers to non-transitory storage hardware, non-transitory storage device or non-transitory computer system memory that may be accessed by a controller, a microcontroller, a computational system or a module of a computational system to encode thereon computer-executable instructions or software programs. A non-transitory "computer-readable medium" may be accessed by a computational system or a module of a computational system to retrieve and/or execute the computer-executable instructions or software programs encoded on the medium. Examples of non-transitory computer-readable media may include, but are not limited to, one or more types of hardware memory, non-transitory tangible media (for example, one or more magnetic storage disks, one or more optical disks, one or more USB flash drives), computer system memory or random-access memory (such as, DRAM, SRAM, EDO RAM), and the like.

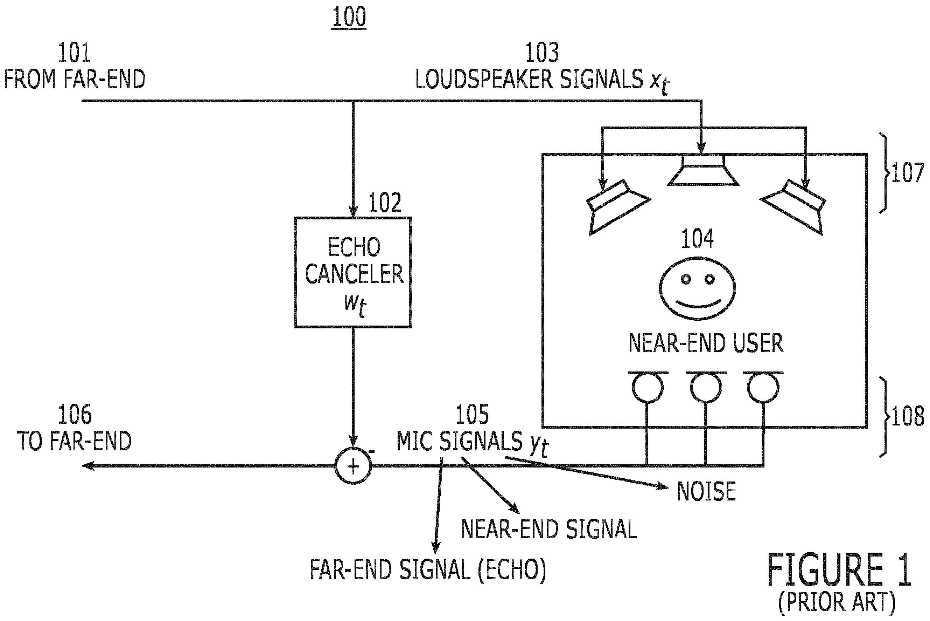

FIG. 1 shows an example embodiment of a conventional acoustic echo cancellation system that supports two-way communication between devices used by a near-end user 104 and a far-end user. While in use by the near-end user 104, the device maintains connection with a far-end system (e.g., the device used by a far-end user) over a communication channel (e.g., an internet connection). Although a specific number of loudspeakers 107 and microphones 108 are depicted in the system 100 shown in FIG. 1, the device may utilize one or more loudspeakers 107 and one or more microphones 108 to receive loudspeaker signals 103 from the far-end system 101, project the loudspeaker signals 103 to the near-end user 104, and send microphone signals 105 to the far-end system 106 (e.g., a far-end user).

The microphone signals 105 may include background noise from the environment of the near-end user 104, noise produced by the near-end user 104, as well as an echo from the far-end signals that have been received from the far-end system 101 and projected by the one or more loudspeakers 107. As such, the system 100 includes an echo canceller 102 to remove at least some of the echo of the far-end signal that is captured by the one or more microphones 108 before the microphone signals 105 are transmitted to the far-end system 106. Ideally, only the noise produced by the near-end user 104 and their environment remains after this echo cancellation process. However, a conventional echo canceller may not remove all of the echo in at least some situations, thereby complicating the communication between the near-end user 104 and the far-end user.

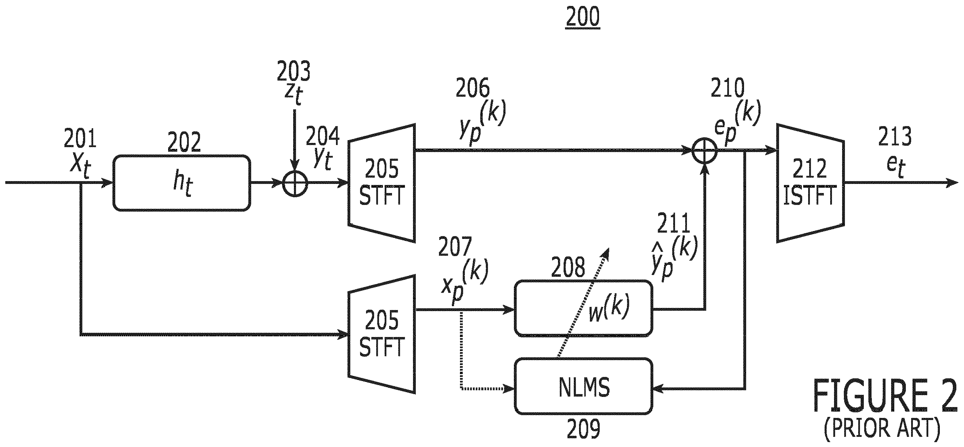

FIG. 2 depicts an example embodiment of a conventional Weighted Overlap-Add (WOLA)-based adaptive echo cancellation system 200, specifically with independent adaptation of respective subbands. This system, similar to the one described in FIG. 1, would similarly be used by a device with one or more loudspeakers and one or more microphones. The process implemented by this WOLA-based adaptive echo cancellation system begins when one or more loudspeaker input signals 201 pass through a channel 202 with an additive near-end signal 203, from the near-end user speaking into the one or more microphones, to form one or more microphone signals 204. The Short-Time Fourier Transform (STFT) 205 then transforms the one or more microphone signals 204 into one or more subband sequences 206.

The one or more subband sequences 206 created from the one or more microphone signals may be represented

by $y_p^{(k)}$, as shown in 206, where $k$ represents a range of 0 to $n$ - 1. Here $n$ represents the number of subband sequences produced by the STFT 205 processing of the one or more microphone signals 204. Additionally, $p$ represents the sequential frame index. Frames are generated at a rate of $L < N/\Omega$ lower than the original sampling rate, where L represents the hop-size or frame-size, e.g., the number of samples that are non-overlapping between consecutive frames, $N$ is representative of the Fast Fourier Transform (FFT) size and $\Omega$ represents the oversampling factor of the STFT.

Next, similarly to the one or more microphone signals 204, the one or more loudspeaker input signals 201 are transformed into one or more subband sequences 207 by the STFT 205. This system 200 may use an adaptive filter 208 and 209 which consists of a subband filter 208 and an adaptive filter 209 implementing an adaptive filtering algorithm. After the transformation of the one or more loudspeaker input signals 201, the one or more subband sequences 207 produced by the transformation are convolved with the subband filter 208 to obtain a prediction 211 of the one or more subband sequences 206 created during the STFT 205 of the one or more microphone signals 204. This convolution results in a subband error 210. The final stage of the echo cancellation process involves passing the resulting one or more subband errors 210 through an inverse Short-Time Fourier Transform (ISTFT) 212 to obtain a time-domain error signal 213.

The goal of this system 200 is to design the adaptive filter 208 and 209 such that the system minimizes the resulting time-domain error signal 213. Ideally after this process, as mentioned in the discussion of FIG. 1, only sound produced by the near-end user that is included in the additive near-end signal 203 remains and no echo from the output of the one or more loudspeakers is present. FIG. 2 shows an open-loop approach of a WOLA-based adaptive echo cancellation system. In one embodiment the adaptive filter 209 implements a Normalized Least Mean Square (NLMS) algorithm. In this approach, the adaptive filter 209 is used independently in respective subbands to adapt the subband filter 208 to optimally produce a prediction 211 of the one or more subband sequences 206 created during the STFT 205 of the one or more microphone signals 204.

A WOLA-based adaptive echo cancellation system has some advantages over other methods of echo cancellation. One such advantage is a lower complexity when compared with time-domain filters. However, due to aliasing, there is a lower limit, or error floor, to how small the error can become for the impulse response of the channel 202. This error floor can be reduced by choosing larger values of the oversampling factor $\Omega$ of the STFT (e.g., using $\Omega = 3$ instead of $\Omega = 2$ or using $\Omega = 4$ instead of $\Omega = 3$). However, when typical adaptive filtering techniques are used, the convergence of the adaptive filter 208 and 209 responses to optimal coefficients gets slower for larger values of the oversampling rate $\Omega$. Overall, since it takes longer for echo cancellation to converge, this results in the system taking longer to initialize or recover from dynamic changes in the acoustic environment. This in turn reduces the perceived audio quality for the far-end user, with who the near-end user is communicating.

In particular, the goal is for the far-end user to be able to hear and understand the near-end users audio signal (e.g., speech, music, or other background noise) without presenting any echo of the far-end user's own speech. If the oversampling rate SZ is too low, there will be an error floor in the echo cancellation, meaning that the far-end user will hear a noticeable echo, especially when the near-end signal is quiet. If an echo is present, it may also present "unnatural" sounding features of the aliased residual echo. However, this problem can be solved by sufficient oversampling.

As previously mentioned, large values of the oversampling rate $\Omega$ conventionally cause a slower convergence speed. In some cases, this can cause the far-end user to hear noticeable echo artifacts for several seconds after a communication session begins. More importantly, it can cause noticeable echo artifacts to appear throughout the session when there are significant changes in the environment of the near-end user. For example, this can occur when a near-end user is moving (e.g., near-end user walks around their room or throughout their home) or when the environment is moving (e.g., a door opening or closing, a car or other object moving past the near-end user). Thus, in a dynamic environment, slow convergence of the echo canceller can cause intermittent echo artifacts that impede communication and negatively impact the user's perception of the quality of the audio system.

An example embodiment, to be described in detail below, provides a low-complexity method to improve the convergence speed of the adaptive filter 208 and 209 in the WOLA-based adaptive echo cancellation system. An example embodiment is able to improve the experience quality for users by obtaining fast convergence for WOLA-based adaptive echo cancellation system with high values of the oversampling rate $\Omega$. Thus, a system is provided in accordance with an example embodiment with fast convergence and a low error floor.

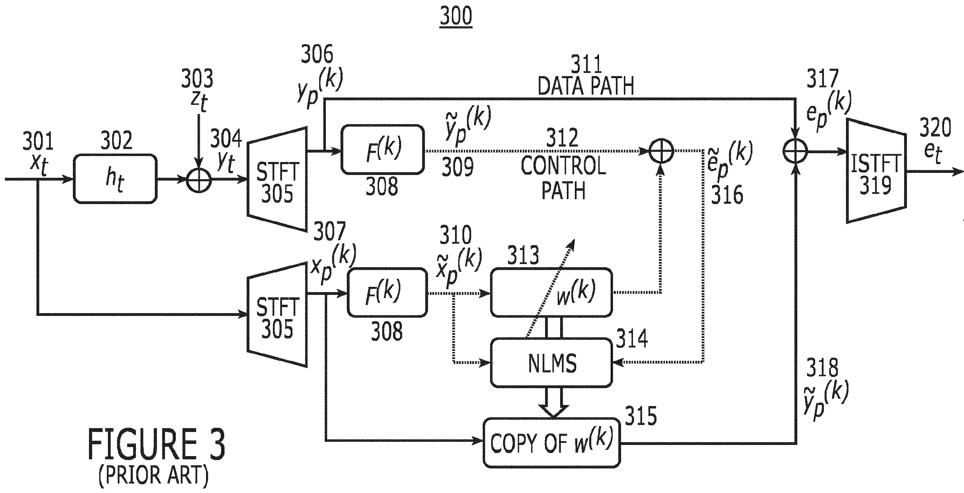

FIG. 3 shows an example embodiment of a WOLA-based adaptive filtering system 300 for echo cancellation utilizing per-subband whitening. This system may allow for faster convergence than other WOLA-based adaptive filtering systems. To do so, this example system adds several elements to the conventional WOLA-based adaptive filtering system shown in FIG. 2.

This system 300 uses whitening by spectral emphasis (WBS) on respective subbands. WBS is additionally described by U.S. Patent No. 7,783,032 and Canadian Patent No. 2,410,749. During this process, a fixed pre-emphasis filter 308 is used to process one or more subband sequences 306 created from one or more microphone signals 304 and one or more subband sequences 307 created from one or more loudspeaker signals 301. This results in one or more filtered, or whitened, microphone signals 309 and one or more filtered, or whitened, loudspeaker signals 310. These filtered signals are used in a control path 312, represented by dashed lines in the system 300. The control path 312 utilizes an adaptive filter 313 and 314, which may consist of a subband filter 313 and an adaptive filtering algorithm 314. The adaptive filter 313 and 314 may determine coefficients of the control-path subband filter 313. The purpose of the control-path subband filter 313 is to remove content attributed to the far-end signal from the one or more filtered microphone signals 309. The purpose of the fixed pre-emphasis filter 308 is to even out the power spectrum of the one or more subband sequences 306 (created from the one or more microphone signals 304) and the one or more subband sequences 307 (created from the one or more loudspeaker signals 301). This evening out of the power spectrum allows the adaptive filter 313 and 314 to converge at a faster speed than it would in the conventional WOLA-based adaptive echo cancellation system shown in FIG. 2.

Additionally, the system 300 provides for a data path 311, which is represented by solid lines in the system 300. This path utilizes a subband filter 315, similar to the control-path subband filter 313, hereinafter referred to as the data-path subband filter 315. The data-path subband filter 315 is configured with coefficients that are copied from the coefficients of the control-path subband filter 313. The original, non-filtered, one or more subband sequences 306 and one or more subband sequences 307 are passed along the data path 311 to the data-path subband filter 315. During this process, the one or more subband sequences 307 created from the one or more loudspeaker signals 301 are subtracted from the one or more subband sequences 306 created from the one or more microphone signals 304 and result in the data-path output signal of subband error 317. One purpose of the separate control path 312 and data path 311 is to prevent the near-end signal from being affected by the filtering/whitening process of the fixed pre-emphasis filter 308.

As described above, WBS may be used on respective subbands. However, whitening by decimation (WBD) may be used instead. In this regard, the fixed pre-emphasis filter 308 is replaced by downsampling operations. Similar to the result of the fixed pre-emphasis filter 308, the downsampling operations result in whitened subband sequences created from microphone signals and loudspeaker signals. However, in this instance, coefficients of the control-path subband filter 313 cannot be copied to the data-path subband filter 315. Instead, the coefficients are upsampled so they are suitable for the data-path subband filter 315.

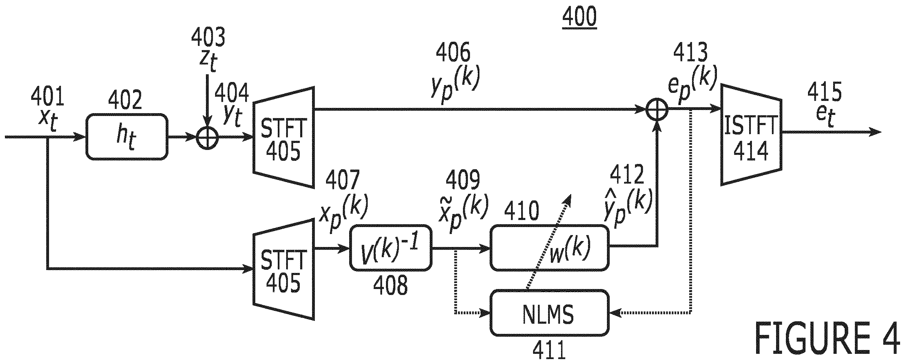

FIG. 4 shows an example embodiment of the present disclosure. FIG. 4 illustrates a subband-based echo cancellation system 400, where a first subband filter, such as a first filter bank and, in an example embodiment, a fixed, whitening filter 408, may be placed in series with a second subband filter, such as a second filter bank and, in an example embodiment, an adaptive filter, in respective subbands. This second subband filter may consist of an adaptive filter 410 configured to implement an adaptive filtering algorithm 411. In one embodiment the adaptive filtering algorithm is a Normalized Least Mean Square (NLMS) algorithm.

In operation, correlation from the input signal of the second subband filter, such as the adaptive filter 410, in respective subbands may be removed by the subband-based echo cancellation system 400. This allows for faster convergence of the second subband filter, such as the adaptive filter 410, than in the conventional WOLA-based adaptive filtering system. While the depiction and discussion of FIG. 4 contemplates one example embodiment, other possible embodiments will be discussed in detail below. For example, while the subband-based echo cancellation system 400 may be an open-loop WOLA implementation, another example embodiment provides a closed-loop WOLA implementation.

This system 400 of FIG. 4 may be used by a device with one or more loudspeakers and one or more microphones. The echo cancellation process implemented by the system 400 begins when one or more loudspeaker input signals 401 pass through a channel 402 with an additive near-end signal 403, from the near-end user speaking into the one or more microphones, to form one or more microphone signals 404. The STFT 405 then transforms the one or more microphone signals 404 into one or more subband sequences 406.

As described previously, the one or more subband sequences 406 created from the one or more microphone signals may be represented by $y_p^{(k)}$, as shown in system 400, where $k$ represents a range of 0 to $n$ -1. Here $n$ represents the number of subband sequences produced by the STFT 405 processing of the one more microphone signals 404. Additionally, $p$ represents the sequential frame index. Frames are generated at a rate of $L < N/\Omega$ lower than the original sampling rate, where L represents the hop-size or frame-size, e.g., the number of samples that are non-overlapping between consecutive frames, $N$ is representative of the FFT size and $\Omega$ represents the oversampling factor of the STFT. In an instance in which the FFT size is larger than $\Omega L$, the frames of length $\Omega L$ may be zero-padded to length N.

Next, similarly to the one or more microphone signals 404, the one or more loudspeaker input signals 401 are transformed into one or more subband sequences 407 by the STFT 405. The one or more subband sequences 407 then pass through a first subband filter, such as a fixed, whitening filter 408, which removes or at least reduces the systematic correlation from respective subbands of the one or more subband sequences 407. As described below, the first subband filter includes a set of coefficients and is applied to a respective subband of a first set of one or more subband sequences to produce one or more filtered far-end subband sequences with a reduced time correlation. In relation to the reduced time correlation, the time correlation function r(r) of one example embodiment may generate a smaller value for every $\tau > 0$. However, in other example embodiments, a reduced time correlation is provided in an instance in which the time correlation function r($\tau$) generates a smaller value for some, but not all $\tau > 0$ and/or in an instance in which the average value generated by the time correlation function r($\tau$) is smaller. In an example embodiment, the first subband filter is a fixed, whitening filter 408 and, more particularly, is a fixed, infinite impulse response (IIR) whitening filter. The first subband filter, such as the fixed, whitening filter 408, generates an approximately filtered, or whitened, one or more subband sequences 409.

Next, the one or more subband sequences 407 are processed by, such as by being convolved with, the second subband filter 410 to obtain a prediction 412 of the one or more subband sequences 406 created during the STFT 405 of the one or more microphone signals 404. This convolution results in a subband error 413. The final stage involves passing the resulting subband error 413 through an inverse Short-Time Fourier Transform (ISTFT) 414 to obtain a time-domain error signal 415.

In FIG. 4, the first subband filter, such as a fixed, whitening filter (or IIR filter), 408 is denoted as $V^{(k)-1}$. This designation represents the inverse operation of a convolution process with a specified Finite Impulse Response (FIR) filter $v^{(k)}$ whose coefficients may be calculated in advance. In one embodiment, once the approximately filtered, or whitened, one or more subband sequences 409 are generated, the residual correlation remaining in the one or more subband sequences 409 may be weak, or relatively low. This allows the second subband filter, such as an adaptive filter 410 and 411, to converge quickly to optimal values. In contrast to the system of FIG. 3, there is no fixed, whitening filter applied to the one or more subband sequences 406 produced by the one or more microphone signals 404. Thus, the need to have a separate control path 312 and data path 311 is eliminated from the embodiment of FIG. 4. The resulting system 400, is one that is less complex than the system of FIG. 3 and one that converges faster than the system of FIG. 2. Further advantages of various example embodiments over conventional systems, such as systems 200 and 300 will be discussed in further detail below.

The first subband filter, such as a fixed, whitening filter 408, of the example embodiment shown in FIG. 4 provides for meaningful differences relative to the fixed pre-emphasis filter 308 of FIG. 3. In this regard, the system of FIG. 3 uses an oversampling factor of $\Omega = 2$. This oversampling results in the majority of the subband signals being low-pass signals that mainly occupy the lower half of the spectrum. The pre-emphasis filter 308 emphasizes the upper half of the spectrum to achieve approximate whitening. By contrast, in the example embodiment of the system 400 depicted by FIG. 4 the even-numbered subbands have low-pass signals, and the odd-numbered subbands have high-pass signals. Because of this, a different first subband filter, such as a different fixed, whitening filter, is used in odd subbands than the first subband filter used in even subbands. For example, an oversampling factor of $\Omega = 3$ would require 3 different types of first subband filters, such as fixed, whitening filters, and an oversampling factor $\Omega = 4$ would require 4 different types of first subband filters, such as fixed, whitening filters. The appropriate fixed design of these types of first subband filters, such as fixed, whitening filters, provides for a number of the improvements offered by this example embodiment.

In an example embodiment, different operations are completed in an offline phase and real-time phase. The design of the first subband filter, such as a fixed, whitening filter, is completed in the offline phase. Another operation that may be completed in the offline phase includes calculation of the systematic correlation that would occur in respective subbands of the one or more subband sequences 407 if the one or more loudspeaker input signals 401 were to consist of only white noise. Other loudspeaker input signal distributions may be utilized in other example embodiments, such as auto-regressive (AR) processes. Then, also in the offline phase, the system 400 calculates the coefficients of a stable first subband filter, such as a stable fixed, whitening filter 408, for respective subbands of the one or more subband sequences 407, that would remove this systematic correlation. In the real-time phase, the coefficients, for respective subbands, of the first subband filter, such as the fixed, whitening filter 408, may be applied to respective subbands of the one or more subband sequences 407. This application results in one or more approximately filtered, or whitened, subband sequences 409. The one or more approximately filtered, or whitened, subband sequences 409 are then processed by the second subband filter, such as an adaptive filter 410 and 411 in the real time implementation phase to predict the one or more subband sequences 406 created from the one or more microphone signals 404. An example embodiment of the offline phase and real-time phase will be described in greater detail below.

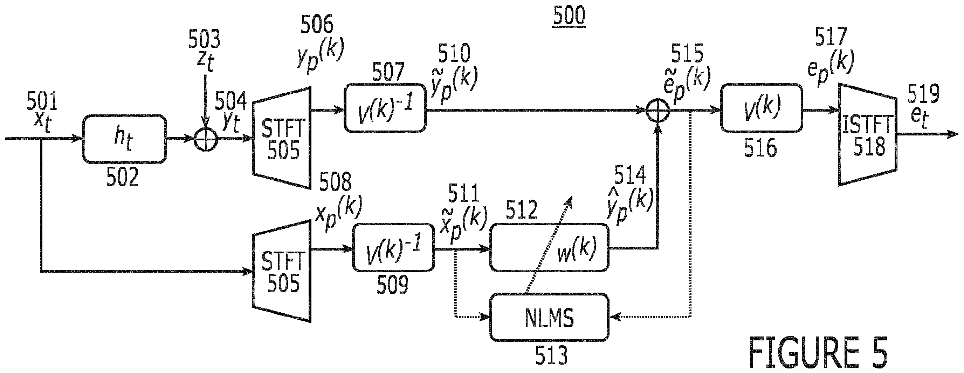

FIG. 5 shows another example embodiment of the present disclosure. While the description of FIG. 4 contemplates a system 400 with a single first subband filter, such as a single fixed, whitening filter 408, which is used only to process the one or more subband sequences 407 created from the one or more loudspeaker signals 401, the system 500 of an alternate embodiment may utilize a plurality of first subband filters, such as two first subband filters, e.g., a first fixed, whitening filter 509 and a second fixed, whitening filter 507. In this example embodiment, the second fixed, whitening filter 507 may be used to process the one or more subband sequences 506 created from the one or more microphone signals 504. This processing generates an approximately filtered, or whitened, version 510 of the one or more subband sequences 506.

In this alternate embodiment, instead of producing a prediction 412 of the one or more subband sequences 406, the second subband filter, such as adaptive filtering mechanism 512 and 513, produces a prediction 514 of the whitened, or filtered, version of the one or more subbands 510. The prediction 514 is then compared with the approximately filtered, or whitened, version 510 of the one or more subband sequences 506 and this results in subband error 515. The subband error 515 is then passed through a FIR filter 516. The FIR filter 516 may be a filter that is the inverse of the first subband filter(s), such as the first and second whitening filters 507 and 509. The final stage involves passing the result 517 through an inverse Short-Time Fourier Transform (ISTFT) 518 to obtain a time-domain error signal 519.

The serial concatenation of the fixed, whitening filters 507 and 509 in this example embodiment along with the FIR filter 516 in the upper branch of the system 500 ensures that the additive near-end signal 503 passes through the pair of STFT 505 and ISTFT 518 unchanged. A potential advantage of this embodiment 500 is that in this embodiment the one or more subbands 510 being predicted (e.g., prediction value 514) by the adaptive filter 512 and 513 are also approximately whitened, or filtered. This aspect may improve the convergence and accuracy of some stepsize control algorithms that explicitly or implicitly assume a whitened near-end signal.

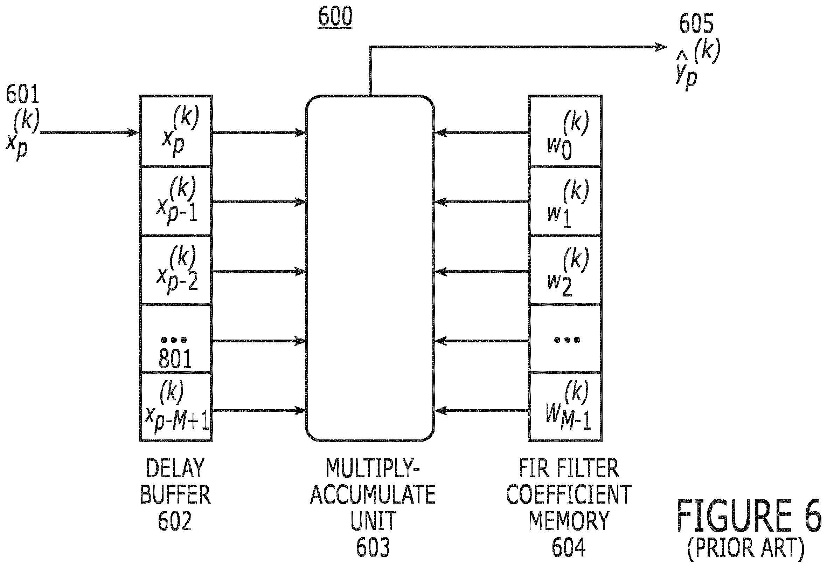

FIG. 6 shows an example embodiment of a subband cancellation filter 600 with $M$ coefficients for a conventional WOLA-based adaptive filtering system, such as illustrated in FIG. 2. As previously stated, the one or more subband sequences 406 created from the one or more microphone signals 404 and the one or more subband sequences 407 created from the one or more loudspeaker signals 401 may be represented by $y_p^{(k)}$ or $x_p^{(k)}$, respectively. Within this notation, $k$ represents a range of 0 to $n - 1$. Here $n$ represents the number of subband sequences produced by the STFT 405 processing of the one or more microphone signals 404. Additionally, $p$ represents the sequential frame index. Frames are generated at a rate of $L < N/\Omega$ lower than the original sampling rate, where L is the hop-size or frame-size, $N$ is representative of the Fast Fourier Transform (FFT) size and $\Omega$ represents the oversampling factor of the STFT. In an instance in which the FFT size is larger than $\Omega L$, the frames of length $\Omega L$ may be zero-padded to length N.

In a conventional WOLA-based echo cancellation system, the $k$-th subband filter receives a sequence of one or more speaker signals 601 for $p = 1,2, ...$ within the sequential frame index. As depicted by filter 600 a delay buffer 602 holds the most recent $M$ values of the sequence. The FIR filter coefficient memory 604 holds $M$ filter coefficient values $w_0^{(k)}, ..., w_{M-1}^{(k)}$ provided by an adaptive filtering algorithm (e.g., NLMS) used by an adaptive filter. A multiply-accumulate unit 603 then multiplies respective values of the delay buffer 602 and the FIR filter coefficient memory 604 and sums the products to calculate the prediction value 605 represented by $\hat{y}_p^{(k)}$. This value is a prediction of one or more subband sequences created from one or more microphone signals. This calculation may be represented by the equation $\hat{y}_p^{(k)} = \sum_{n=0}^{M-1} w_n^{(k)} x_{p-n}^{(k)}$.

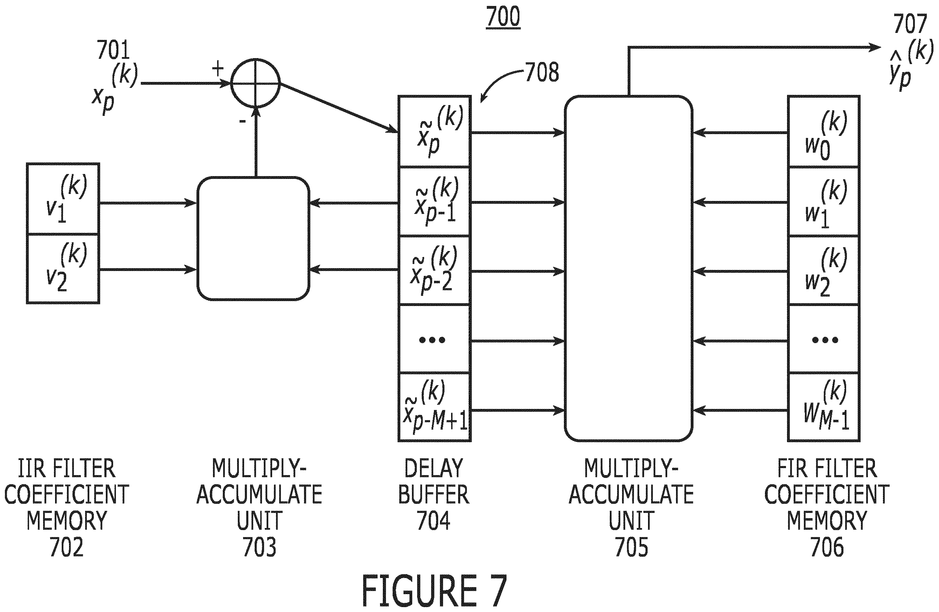

FIG. 7 shows an example embodiment of a subband cancellation filter that may be utilized by the system of FIG. 4 or any other example embodiment of the present disclosure. This subband cancellation filter 700 may utilize an additional multiply accumulate unit (a first multiply accumulate unit 703 and a second multiply accumulate unit 705) as well as a short IIR filter coefficient memory 702 which stores the coefficients of the first subband filter, such as a fixed, whitening filter. The coefficients of the short IIR filter may be calculated in the offline phase and may be represented by

$$v_1^{(k)} = u_{\Omega-2}, v_2^{(k)} = u_{\Omega-3}, ..., v_{\Omega-1} = u_0.$$

The delay buffer 704 may hold the values of one or more whitened speaker signals 708. The one or more whitened speaker signals 708 refer to the whitened, or filtered, version of the one or more speaker signals received at 701. The first multiply-accumulate unit 703 may process the coefficients of the short IIR filter coefficient memory 702 and the values of one or more whitened speaker signals 708 stored in the delay buffer 704 and produce an output for corresponding values. This output calculation may be represented by the equation $\sum_{n=1}^{\Omega-1} v_n^{(k)} \tilde{x}_{p-n}^{(k)}$.

At a given frame p, within the sequential frame index of the one or more whitened speaker signals 708 held by the delay buffer 704, the next whitened signal (e.g., $p$-1 for $p$, $p$-2 for $p$-1) is obtained by subtracting the output of the first multiply-accumulate unit 703 from the corresponding unfiltered speaker signal, of the same frame $p$ (one of the one or more speaker signals received at 701). This process obtains the next whitened signal and may be represented by the equation $\tilde{x}_p^{(k)} = x_p^{(k)} - \sum_{n=1}^{\Omega-1} v_n^{(k)} \tilde{x}_{p-n}^{(k)}$.

For the same given frame $p$, the second multiply and accumulate unit 705 may produce an output consisting of the scalar product of the FIR coefficients, stored in the FIR coefficient memory 706, with the corresponding whitened speaker signal at frame *p*. This process may yield the prediction 412 of the one or more subband sequences 406 shown in FIG. 4. This prediction calculation may be represented by the equation $\hat{y}_p^{(k)} = \sum_{n=0}^{M-1} w_n^{(k)} \tilde{x}_{p-n}^{(k)}$.

Additionally, a second subband filter, such as an adaptive filter, may implement an adaptive filtering algorithm, such as NLMS, configured to periodically update the FIR filter coefficient memory 706 based on the one or more whitened speaker signals 708 held by the delay buffer 704, and the prediction error $e_p^{(k)} = y_p^{(k)} - \hat{y}_p^{(k)}$. In this representative equation, $y_p^{(k)}$ is used to note the one more microphone signals 406 and $\hat{y}_p^{(k)}$ represents a prediction 412 of the one or more subband sequences 406 depicted in the example embodiment of system 400. Due to the short IIR filter coefficient memory 702 and FIR coefficient memory 706 sharing a delay buffer 704 and since there are only a small number of coefficients of the first subband filter, such as IIR filter coefficients, the additional complexity required to implement the first subband filter, such as a fixed, whitening filter, is quite small. Further example embodiments of the offline phase will be discussed in detail below.

The offline design phase may be carried out by a computing device and/or by execution of the computer program instructions stored by any sort of programmable computing medium. For example, the IIR filter coefficient memories for multiple STFT configurations may be pre-computed and stored by the user devices. Thereafter, in real time, the valid set of IIR filter coefficients may be fetched from storage. This phase may be dependent upon one or more of the following inputs used by the STFT: the coefficient(s) of the analysis window $\psi(n)$ used by the STFT, the FFT size *N* used by the STFT, the hop-size *L* used by the STFT, and/or the oversampling factor $\Omega$. In some embodiments, zero-padding of the FFT may be used such that the size of the FFT is a power of two. The output of the offline design phase may be a number of IIR filter coefficients $v_1^{(k)}, ..., v_{\Omega-1}^{(k)}$ equivalent to $\Omega$ - 1, for respective STFT subbands from *k* = 0 to *k* = *N* - 1. After the coefficients of the first subband filter, such as the IIR filter coefficients, are calculated, they are stored, such as in the IIR filter coefficient memory 602 associated with respective subbands, as described above. These coefficients do not need to change as long as the aforementioned STFT parameters are not modified.

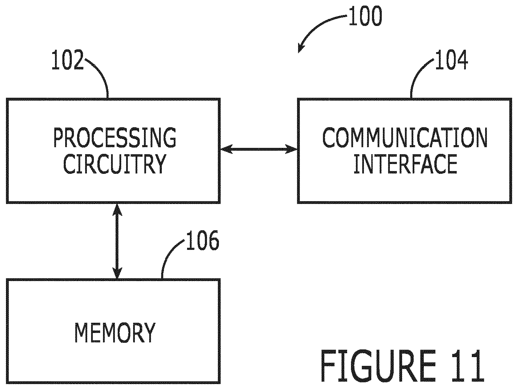

The process of determining systematic correlation in accordance with one example embodiment will be provided below. This process may be implemented by the apparatus of FIG. 11 as described below, as well as a corresponding method and non-transitory computer readable medium. In this regard, $\psi(n)$ is a synthesis/analysis window, non-zero on the interval $0 < n < L\Omega = N$ where *L* is the hop-size and $\Omega$ the oversampling factor and *N* is the Fourier transform size. The Short-Time Fourier Transform of the sequence *x(n)* is defined as:

$$x_{p,k} = \sum_m x(m) \overline{\psi_{p,k}(m)}$$

where $\psi_{p,k}(n)$ is calculated by the equation:

$$\psi_{p,k}(n) = \psi(n - pL)e^{j\frac{2\pi}{N}k(n-pL)}$$

For a respective subband *k*, a subband process is obtained downsampled by *L*, with frame index *p*. In one embodiment, the sequence x(n) has a zero mean, iid stationary process with unit variance. The systematic correlation function represented by

$$r_{xx}^k(q) = \mathrm{E}\big[x_{p,k}\bar{x}_{p+qk}\big]$$

may be determined. In this regard, the systematic correlation function $r_{xx}^k(q)$ may be defined by the equation provided below:

$$r_{xx}^k(q) = \mathrm{E}\left[\sum_n x(n)\psi_{p+q,k}(n)\sum_m \bar{x}(m)\bar{\psi}_{p,k}(m)\right] = \sum_n \sum_m \psi_{p+q,k}(n)\bar{\psi}_{p,k}(m)\delta(n-m)$$

$$= \sum_n \psi_{p+q,k}(n)\bar{\psi}_{p,k}(n) = \sum_n \psi_{0,k}(n-qL)\bar{\psi}_{0,k}(n) = \phi_{k,k}(qL)$$

where the kernel function $\phi_{k,k}(n)$ is defined as:

$$\phi_{k,k}(n) = \sum_m \psi_{0,k}(m-n)\bar{\psi}_{0,k}(m) = \sum_m \psi(m-n)\psi(m)e^{j\frac{2\pi}{N}(k(m-n)-km)}$$

$$= e^{-j\frac{2\pi}{N}kn}\sum_m \psi(m-n)\psi(m) = e^{-j\frac{2\pi}{N}kn}\rho_0(n)$$

and where $\rho_0(n)$ is the result of convolving the analysis window $\psi(n)$ with its time-reversed window $\psi(-n)$. This process may be represented by the equation shown below:

$$\rho_0(n) = \sum_m \psi(m-n)\psi(m)$$

Since the analysis window $\psi(n)$ has support in the range $0 \le n < \Omega L$, the convolved window $\rho_0(n)$ may have support defined as $-\Omega L + 1 \le n \le \Omega L - 1$, as does $\phi_{k,k}(n)$. After subsampling at time instants $qL$, the self-correlation $r_{xx}^k(q)$ may be non-zero only for values of $q$ where $|q| \le \Omega - 1$.

It may also be noted, that in the case that $\Omega L = N$, from the expression $\phi_{k,k}(n)$ that the systematic correlation function satisfies $r_{xx}^{(k+\Omega)}(q) = r_{xx}^{(k)}(q)$. This means that the offline phase of the IIR filter only needs to design a number of different filters equivalent to the oversampling factor $\Omega$, since a given filter assigned to a subband only depends on $k \bmod \Omega$.. In the case that $\Omega L < N$, this property does not hold and so a different IIR filter may be designed for each subband $0 \le n < N$.

The following description provides more detail on the operations that may be required to calculate the coefficients of the first subband filter, such as a fixed, whitening filter. As the first operation, a goal is to find a filter $u(q)$ of length $\Omega$ such that $u(q) * u(-q) = Cr_{xx}^{(k)}(q)$ for some constant C. One method of achieving this is by polynomial factorization. The complex polynomial may be defined as:

$$p(x) = r_{xx}^{(k)}(1-\Omega) + r_{xx}^{(k)}(2-\Omega)x + \cdots + r_{xx}^{(k)}(\Omega-1)x^{2\Omega-2}$$

By known factorization methods its zeros may be determined so that it also has the representation:

$$p(x) = r_{xx}^{(k)}(\Omega-1)\prod_{i=0}^{2\Omega-2}(x-z_i)$$

Due to the conjugate symmetry $r_{xx}^{(k)}(q) = \overline{r_{xx}^{(k)}(-q)}$, it can be shown that the zeros occur in symmetric pairs.

In particular, the zeros can be ordered with increasing magnitude such that at least one zero in respective pairs has a magnitude less than or equal to 1. This relationship may be represented by the equation: $z_i\overline{z_{2\Omega-2-i}} = 1$. By collecting

the smallest magnitude zero from respective pairs, a polynomial may be defined (shown below), such that $g(x)\overline{g(x^{-1})} = x^{1-\Omega}Cp(x)$:

$$g(x) = \prod_{i=0}^{\Omega-1} (x - z_i) = u_0 + u_1 x + \cdots + u_{\Omega-1}x^{\Omega-1}$$

The coefficients of the first subband filter, such as the fixed, whitening filter coefficients $u_0, u_1, ..., u_{\Omega-1}$ can be determined by expanding the product form definition of $g(x)$. Given the correspondence between polynomial multiplication and convolution, this means that the filter $\boldsymbol{u} = [u_0\ u_1\ ...\ u_{\Omega-1}]$ satisfies $u(q) * u(-q) = Cr_{xx}^{(k)}(q)$. Thus, convolving a white noise process with u may result in a sequence with systematic correlation proportional to $r_{xx}^{(k)}(q)$. Hence the process $x_q^{(k)}$ may be whitened using a first subband filter, such as an IIR/fixed, whitening filter, that inverts this convolution. That is, the first subband filter, such as an IIR filter, may be defined by the equation shown below (wherein $u_{\Omega-1}$ = 1):

$$\tilde{x}_p^{(k)} = x_p^{(k)} - u_{\Omega-2}\tilde{x}_{p-1}^{(k)} - u_{\Omega-3}\tilde{x}_{p-2}^{(k)} - \cdots - u_0\tilde{x}_{p-\Omega+1}^{(k)}$$

While this may be a standard form of the first subband filter, e.g., IIR/fixed, whitening filter, the output power of the filter may be scaled up or down if desired. This can be done without changing the correlation property, by putting a multiplier s in front of the $x_p^{(k)}$ term, as shown in the representation below:

$$\tilde{x}_p^{(k)} = sx_p^{(k)} - u_{\Omega-2}\tilde{x}_{p-1}^{(k)} - u_{\Omega-3}\tilde{x}_{p-2}^{(k)} - \cdots - u_0\tilde{x}_{p-\Omega+1}^{(k)}$$

In the final step of this process the coefficients of the first subband filter, such as the IIR coefficients, may be stored in the IIR filter coefficient memory 602. The coefficients of the first subband filter, such as the IIR coefficients, to be stored in the IIR filter coefficient memory 602 of the k-th subband may be represented by $v_1^{(k)} = u_{\Omega-2}, v_2^{(k)} = u_{\Omega-3}, ..., v_{\Omega-1} = u_0$.

In some cases, some values of the analysis window $\psi$ may result in the largest magnitude zero of $g(x)$, $z_{\Omega-1}$ being equal to 1 instead of being less than 1 as it is desired. In a case such as this, the corresponding causal first subband filter, such as the IIR/fixed, whitening filter, may not be numerically stable. One solution for this situation would be to modify the design of the analysis window to obtain a window such that $|z_{\Omega-1}| < 1$ during the offline phase. Typically, analysis windows are designed to have perfect reconstruction properties and sharp frequency roll-off. Given an analysis window $\psi_1$ with perfect reconstruction property and a sharp frequency roll-off, but with $|z_{\Omega-1}| = 1$, a second analysis window $\psi_2$ may be designed with perfect reconstruction property and a less sharp frequency roll-off, that has $|z_{\Omega-1}| < 1$.

For example, the second analysis window may be equal to a constant value $\psi_2(n) = \sqrt{\Omega^{-1}}$ for $0 \le n < L\Omega$ and $\psi_2(n) = 0$ otherwise. Then a third window $\psi_3 = \sqrt{(1-\lambda)\psi_1^2 + \lambda\psi_2^2}$ may also have the perfect reconstruction property, and if $\lambda$ is chosen small enough, then $\psi_3$ will typically have sharp frequency roll-off similar to $\psi_1$, and also have the stability property $|z_{\Omega-1}| < 1$ as desired.

While the general concept of pre-whitening a sequence of subbands to improve the convergence of a second subband filter, such as an adaptive filter, is well known, typically the pre-whitening filter must be an adaptive filter in order to undo an unknown and changing systematic correlation structure. For at least some embodiments of the present disclosure, however, a technical advantage is provided in that the STFT may generate subband sequences, particularly for a large hop size *L,* with a correlation structure that is dominated by a fixed, systematic term and only a weak residual term. The systematic correlation may be removed by the first subband filter, such as a fixed, whitening filter, thus obtaining a robust and fast converging system for echo cancellation.

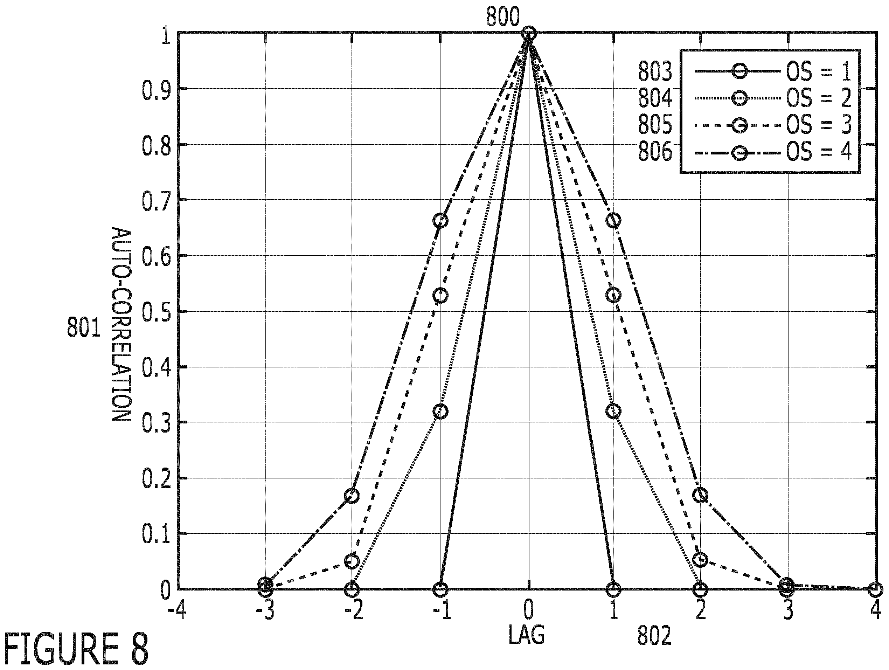

FIG. 8 shows systematic correlation functions for the first subband of a WOLA system with various oversampling factors. In this depiction, systematic correlation function $r_{xx}^{(0)}(q)$, which was previously discussed, as a function of lag $q$ 802, is shown for the first subband, in STFT systems with typical analysis windows and oversampling parameters $\Omega = 1$ (represented by line 803), $\Omega = 2$ (represented by line 804), $\Omega = 3$ (represented by line 805), and $\Omega = 4$ ((represented by line 806). Auto-correlation 801, under these parameters, is shown on the y axis. As previously explained, and shown by the graph 800, correlation functions are shown to be non-zero only for lag $|q| < \Omega$ or $|q| \leq \Omega - 1$.

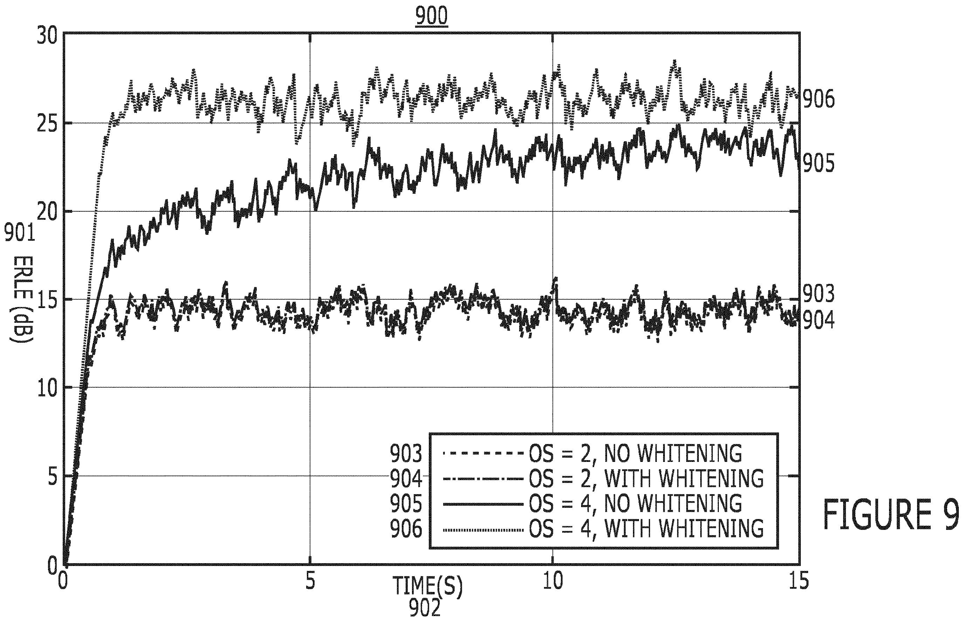

FIG. 9 depicts Echo Return Loss Enhancement (ERLE) as a function of time in a single particular subband of a WOLA-based echo cancellation system under various conditions. ERLE 901 is represented on the y axis while time 902 is represented on the x axis. A key for the various conditions 903, 904, 905, and 906, is shown at the bottom right of the graph. The graph 900 depicts the impacts of an example embodiment on convergence speed in a WOLA-based echo cancellation system. The over sampling factors $\Omega = 2$ and $\Omega = 4$ (and the resulting lines 904 and 906, respectively) represent the convergence speed when using a first subband filter in the form of a fixed, whitening filter in accordance with an example embodiment described previously. For comparison, over sampling factors $\Omega = 2$ and $\Omega = 4$, without the use of the first subband filter, e.g., the fixed, whitening filter, that has been described, are also shown in lines 903 and 905, respectively, in the graph 900. As such, at least some example embodiments of the present disclosure provide a positive impact on convergence speed as what is shown in the graph 900 of FIG. 9. The effects on convergence speed shown in the graph 900 may be representative of convergence speed in an echo cancellation system where the one or more loudspeaker input signals consist of only white noise. Additionally, the one or more microphone signals produced by the near-end signal may also consist of only white noise.

The channel impulse response of the WOLA-based echo cancelation system used in the simulation of graph 900 may be an instance of a random Gaussian vector of length 1000. The WOLA-based echo cancelation system may be used with hop size L = 50. The oversampling factor $\Omega = 2$ are shown by dashed lines 903 and 904. The over sampling factor $\Omega = 2$ may be accompanied by an FFT size of $N = 100$. In contrast, the oversampling factor $\Omega = 4$ are depicted with solid lines 905 and 906 and may use an FFT size of $N = 200$.

For the oversampling factors plotted in lines 903 and 905, a conventional WOLA-based echo canceller with no whitening filter is applied within respective subbands. This may consist of a similar system to the description of FIG. 2. For the curves plotted in lines 904 and 906, the echo canceller is preceded by a first subband filter in the form of a fixed, whitening filter. This may be by a process similar to the description of FIG. 4 or any other embodiment described herein. Results of a simulation are shown in the graph 900 for a particular subband.

Each curve of the graph 900 shows the evolution of the ERLE for a particular subband as a function of time 902. The ERLE may consist of the ratio of input power (average values of the squared, absolute value of the one or more subbands created from the one or more microphone signals $\left| y_p^{(k)} \right|^2$) to the output power (average value of the squared, absolute value of the subband error $\left| e_p^{(k)} \right|^2$). When time 902 is equal to zero, the coefficients of the first subband filter, such as a fixed, whitening filter, are initialized to zero, and so output power and input power are equal. As time 902 increases or progresses, the echo canceller improves in its ability to remove the echo signal. The output power reduces toward a minimum achievable level, and thus the ERLE increases toward a maximum achievable level.

When the oversampling factor is $\Omega = 2$, for example, the echo canceller converges quickly to its steady state, with or without whitening. This can be seen by the dashed lines 903 and 904 that are depicted very close together. However, the steady state ERLE of these lines 903 and 904 (about 15 dB) is unacceptably low in this case. This level of ERLE is limited by aliasing effects associated with the oversampling factor $\Omega = 2$. When oversampling factor is $\Omega = 4$ and a first subband filter in the form of a fixed, whitening filter is used on respective subbands, the achievable steady state ERLE is much better (about 26 dB) as shown by line 906. However, the oversampling factor of $\Omega = 4$ without a first subband filter, such as a fixed, whitening filter, is shown by line 905 to have a very slow convergence to this steady state. This graph 900 shows that with the first subband filter, such as a fixed whitening filter, the system is able to converge very quickly to an excellent steady state performance.

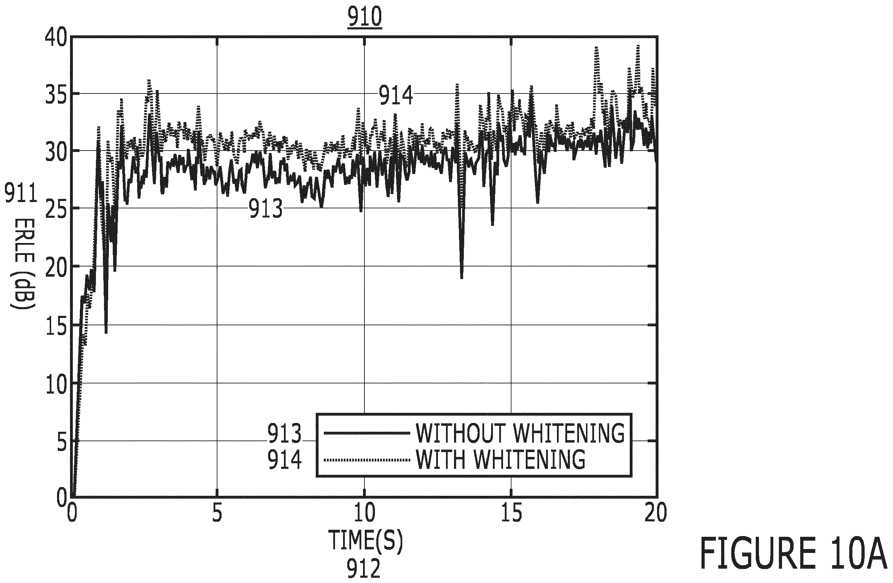

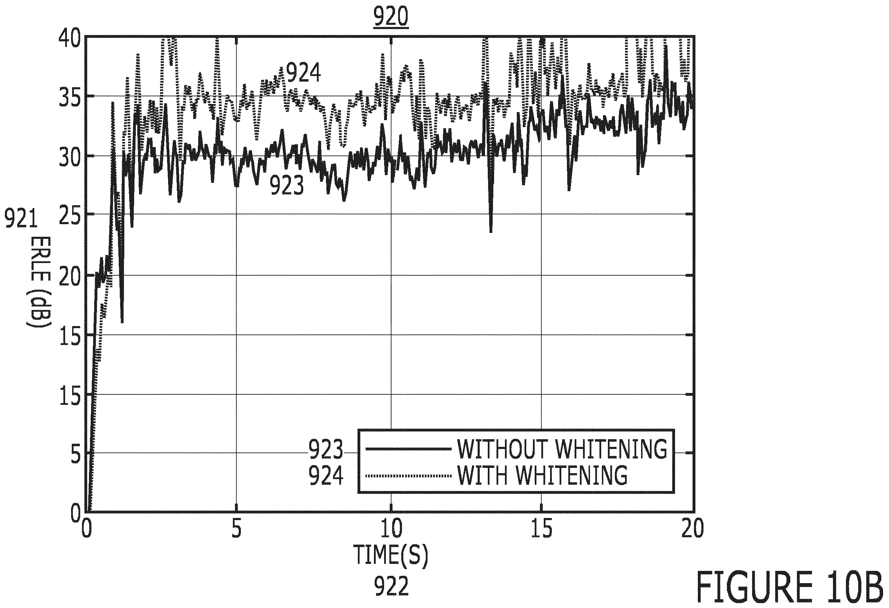

FIG. 10A and FIG. 10B further depict ERLE as a function of time for an entire WOLA echo cancellation system, not just a single subband, under various conditions. The results of FIGs. 10A and 10B may be produced from similar simulations under various conditions. In these simulations, the channel echo response may be a realistic acoustic room impulse response, and the one or more loudspeaker signals and one or more microphone signals created from the near-end signal may represent human speech recordings sampled at 48 kHz. In contrast, FIG. 9 depicted a system with loudspeaker and microphone signals consisting of only white noise. The graph 910 of FIG. 10A shows ERLE 911 represented by the y axis and time 912 represented by the x axis. The results of a simulation shown by the graph 910, may be performed under the following conditions: $L$ = 240, $N$ = 720, $\Omega$ = 3 where $L$ represents the hop size, $N$ is representative of the FFT size, and $\Omega$ represents the oversampling factor of the STFT. The line 913 depicts the ERLE over time without whitening, while the line 914 depicts the ERLE over time with whitening.

The graph 920 of FIG. 10B similarly shows ERLE 921 represented by the y axis and time 922 represented by the x axis. The results of a simulation shown by the graph 920, may be performed under the following conditions: $L$ = 160, $N$ = 640, $\Omega$ = 4 where $L$ represents the hop size, $N$ is representative of the FFT size, and $\Omega$ represents the oversampling factor of the STFT. The line 923 depicts the ERLE over time without whitening, while the line 924 depicts the ERLE over time with whitening.

The graphs 910 and 920 show that the initial improvement of the ERLE (e.g., from 0 to 20 dB) is faster without an example embodiment of the present disclosure. This effect is visible in the first 1 to 2 seconds of the simulation. However, beyond the first 1 to 2 seconds, with the fixed, whitening filter in place the convergence to final performance level (around 32 dB in FIG. 10A and around 35 dB in FIG. 10B), occurs much faster when subbands are processed with the fixed, whitening filter in accordance with an example embodiment. A significant ERLE advantage of the first subband filter, such as the fixed, whitening filter, persists for many seconds after initialization, which yields a perceptible difference in audio quality for the far end user. The advantage of whitening is shown to increase when the oversampling factor $\Omega$ is increased.

For higher fidelity systems, such as, but not limited to, systems that target ERLE above 20 dB, an example embodiment of the present disclosure may be very beneficial, since without an example embodiment of the present disclosure, the system can take much longer to reach maximum performance. As mentioned previously, the result is that if a system uses a high oversampling factor $\Omega$ and the first subband filter, such as the fixed, whitening filter, of an example embodiment, the audio quality will be noticeably better. Any glitches in performance due to rapid changes in the acoustic environment will be shorter and less noticeable, because of the fast convergence shown by FIGs. 9, 10A, and 10B.

As mentioned above, a system which does not utilize the first subband filter, e.g., the fixed, whitening filter, may obtain the fastest rough convergence (e.g., to 20 dB ERLE) while a system using a first subband filter, e.g., a fixed, whitening filter, of an example embodiment is much faster at fine convergence (e.g., above 20 dB ERLE). However, another example embodiment is provided to also provide faster rough convergence. In this example embodiment, a hybrid system is provided that switches between a whitened and non-whitened approach, depending on the current ERLE level. For lower ERLE levels, the first subband filter, such as the fixed, whitening filter, is not used in succession with the second subband filter, such as the adaptive filter, and for higher ERLE levels, the first subband filter, such as the fixed, whitening filter, is used in succession with the second subband filter, such as the adaptive filter. In this regard, lower and higher ERLE levels may be defined as ERLE levels below and above, respectively, a predefined fidelity, such as a predefined decibel level.

In this embodiment, the frequency domain description of the adaptive filter 208 and 209 in FIG. 2 may be denoted as $W^{(k)}(z)$, and the second subband filter, such as adaptive filter 410 and 411, in FIG. 4 may be denoted as $W'^{(k)}(z)$. In order for the systems denoted in FIGs. 2 and 4 to be equivalent, the two filters should satisfy $W^{(k)}(z) = V^{(k)-1}(z)W'^{(k)}(z)$ (e.g., the concatenation of the first subband filter, e.g., the fixed, whitening filter, $V^{(k)-1}(z)$ with $W'^{(k)}(z)$ should be equal to $W^{(k)}(z)$). The time domain representation $w'^{(k)}$ (e.g., coefficients of the second subband filter, such as adaptive filter 410 and 411) can obtained by convolving $w^{(k)}$ (e.g., coefficients of the second subband filter, e.g., adaptive filter 208 and 209) with the FIR filter $v^{(k)}$; or equivalently $w^{(k)}$ can be obtained by applying the first subband filter, e.g., the fixed, whitening filter 408 $V^{(k)-1}$, to $w'^{(k)}$.

This embodiment may begin by utilizing the system 200 depicted in FIG. 2, without the use of a first subband filter, such as a fixed, whitening filter. While the ERLE remains below a first particular threshold, the system may continue to use the system of FIG. 2, with a subband filter, e.g, an adaptive filter 208 and 209 ($w^{(k)}$) used in the k-th subband, but without use of a first subband filter. Once the ERLE exceeds the first particular threshold, the coefficients $w^{(k)}$ of the second subband filter, such as the adaptive filter 208 and 209 of the current k-th subband may be convolved with the FIR filter response $v^{(k)}$ to obtain new coefficients $w'^{(k)}$ suitable for use in the second subband filter, such as adaptive filter 410 and 411 of FIG. 4 or any other embodiment of the present disclosure. While the ERLE remains above the first particular threshold and, in one embodiment, a second particular threshold that is less than the first particular threshold, the system 400 of FIG. 4 is used with coefficients $w'^{(k)}$ of the second subband filter, such as adaptive filter 410 and 411, in series with a first subband filter, such as a fixed, whitening filter $V^{(k)-1}(z)$, to process the subbands. When the ERLE falls below a second particular threshold, the first subband filter, such as the fixed, whitening filter $V^{(k)-1}$ may be applied to the coefficients $w'^{(k)}$ of the second subband filter, such as an adaptive filter 410 and 411, to obtain new coefficients $w^{(k)}$ suitable for use in the second subband filter, such as adaptive filter 208 and 209 of FIG. 2, without the first subband filter. This process may continue until all subbands are processed. In this embodiment the first ($t_1$) and second ($t_2$) particular thresholds may be configured such that $t_2 < t_1$ to create hysteresis, so that the system does not toggle too frequently between the systems of FIG. 2 and FIG. 4.

In an example embodiment, an apparatus 100 is provided for subband-based echo cancellation. The apparatus may be embodied in various manners including as any of a variety of computing devices, such as a server, a personal computer, a computer workstation, a mobile device, such as a mobile telephone or other user equipment, or the like. Regardless of the manner in which the apparatus is embodied, the apparatus of an example embodiment is depicted in FIG. 11 and includes, is associated with or is in communication with processing circuitry 102, a memory 106, and a communication interface 104. The processing circuitry 102 may be in communication with the memory 106 via a bus for passing information among components of the apparatus 100. The memory 106 may be non-transitory and may include, for example, one or more volatile and/or non-volatile memories. In other words, for example, the memory 106 may be an electronic storage device (e.g., a computer readable storage medium) comprising gates configured to store data (e.g., bits) that may be retrievable by a machine (e.g., a computing device like the processing circuitry). The memory 106 may be configured to store information, data, content, applications, instructions, or the like for enabling the apparatus to carry out various functions in accordance with an example embodiment of the present disclosure. For example, the memory 106 could be configured to buffer input data for processing by the processing circuitry 102. Additionally or alternatively, the memory device 106 could be configured to store instructions for execution by the processing circuitry 102.

The apparatus 100 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 100 may therefore, in some cases, be configured to implement an embodiment of the present disclosure on a single chip or as a single "system on a chip." As such, in some cases, a chip or chipset may constitute means for performing one or more operations for providing the functionalities described herein.

The processing circuitry 102 may be embodied in a number of different ways and may include, for example in various embodiments, the subband-based echo cancellation system of FIGs. 4 and 5 and/or the subband cancellation filter of FIG. 7. For example, the processing circuitry 102 may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry 102 may include one or more processing cores configured to perform independently. A multi-core processing circuitry may enable multiprocessing within a single physical package. Additionally or alternatively, the processing circuitry 102 may include one or more processors configured in tandem via the bus to enable independent execution of instructions, pipelining and/or multithreading.

In an example embodiment, the processing circuitry 102 may be configured to execute instructions stored in the memory 106 or otherwise accessible to the processing circuitry 102. Alternatively or additionally, the processing circuitry 102 may be configured to execute hard coded functionality. As such, whether configured by hardware or software methods, or by a combination thereof, the processing circuitry 102 may represent an entity (e.g., physically embodied in circuitry) capable of performing operations according to an embodiment of the present disclosure while configured accordingly. Thus, for example, when the processing circuitry 102 is embodied as an ASIC, FPGA or the like, the processing circuitry may be specifically configured hardware for conducting the operations described herein. Alternatively, as another example, when the processing circuitry 102 is embodied as an executor of instructions, the instructions may specifically configure the processing circuitry to perform the algorithms and/or operations described herein when the instructions are executed. However, in some cases, the processing circuitry 102 may be a processor of a specific device (e.g., an audio processing system) configured to employ an embodiment of the present disclosure by further configuration of the processing circuitry by instructions for performing the algorithms and/or operations described herein. The processing circuitry 102 may include, among other things, a clock, an arithmetic logic unit (ALU) and logic gates configured to support operation of the processing circuitry.

The communication interface 104 may be any means such as a device or circuitry embodied in either hardware or a combination of hardware and software that is configured to receive and/or transmit data, including media content in the form of audio data or the like. In this regard, the communication interface 104 may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

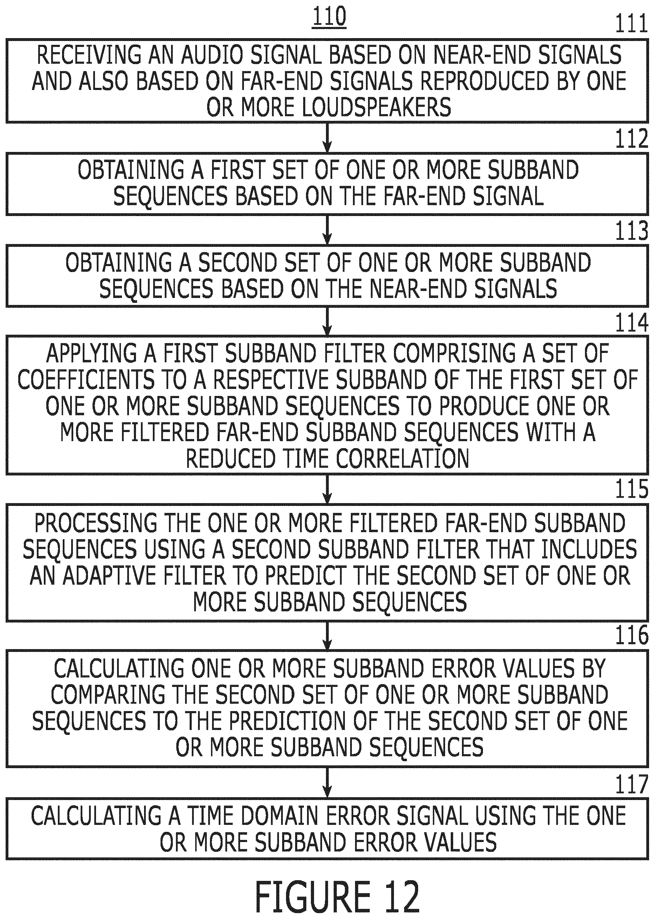

FIG. 12 is a flowchart of operations that may be performed, such as by the apparatus 100 of FIG. 11, in accordance with an example embodiment. At operation 111, the echo-cancellation system, such as the apparatus 100 may include means, such as the processing circuitry 102, the communication interface 104 or the like, for receiving an audio signal based on, at least in part, near-end signals, captured by a microphone, and reproduced far-end signals, such as one or more loudspeaker input signals that may be reproduced by one or more speakers and captured by a microphone. The one or more speakers and one or more microphones, respectively, that are part of a single device or multiple devices and provided to the apparatus 100.

At operation 112, the apparatus 100 includes means, such as the processing circuitry 102 or the like, for obtaining a first set of one or more subband sequences based on the far-end signals. In an example embodiment, the processing circuitry is configured to transform the far-end signals reproduced by one or more speakers and captured by a microphone into the first set of one or more subband sequences. For example, the processing circuitry 102 may be configured to implement a transform, such as a Fourier transform and, more particularly, a Short-Time Fourier Transform to transform the far-end signal(s) into the first set of subband sequence(s). In an example embodiment, the processing circuitry 102 is configured to obtain the first set of one or more subband sequences by applying at least one filter to the one or more far end signals and then downsampling a filtered representation of the one or more far end signals to generate the first set of one or more subband sequences based on the far end signals.

Next, at operation 113, the apparatus 100 includes means, such as the processing circuitry 102 or the like, for obtaining a second set of one or more subband sequences based on the near-end signals. In an example embodiment, the processing circuitry is configured to transform the near-end signals captured by a microphone into the second set of one or more subband sequences. For example, the processing circuitry 102 may be configured to implement a transform, such as a Fourier transform and, more particularly, a Short-Time Fourier Transform to transform the near-end signal(s) into the second set of subband sequence(s).

At operation 114, the apparatus 100 includes means, such as the processing circuitry 102 or the like, for applying a first subband filter, such as a fixed, whitening filter, that includes a set of coefficients to a respective subband of the first set of one or more subband sequences to produce one or more filtered far-end subband sequences with a reduced time correlation. The set of coefficients may be calculated by the processing circuitry 102 using one or more of: the coefficients of the analysis window $\psi(n)$ of a STFT, the FFT size $N$ of a STFT, the hop-size $L$ of a STFT, or the oversampling factor $\Omega$. The first subband filter, such as a fixed, whitening filter, may remove the systematic correlation from respective subbands of the first set of one or more subband sequences. In an example embodiment, the fixed, whitening filter is a fixed, infinite impulse response (IIR) whitening filter. The coefficients of the first subband filter may be differently defined for each of a plurality of subbands such that the coefficients of the first subband filter associated with a first subband of the first set of one or more subband sequences are different than the coefficients of the first subband filter associated with a second subband of the first set of one or more subband sequences. The processing circuitry of an example embodiment is configured to apply the first subband filter to a respective subband of the first set of one or more subband sequences so as to produce one or more filtered far-end subband sequences in real-time.

In an example embodiment, the processing circuitry is configured to apply the first subband filter including the set of coefficients to the respective subband of the first set of one or more subband sequences to produce one or more filtered far-end subband sequences by calculating a systematic correlation for the respective subband that would occur in an instance that the one or more far-end subband sequences have a specified correlation function. In this example embodiment, the processing circuitry is further configured to apply the first subband filter by calculating a set of coefficients of the first subband filter that would reduce the systematic correlation for the respective subband of the first set of one or more subband sequences. Further, the processing circuitry of this example embodiment is additionally configured to apply the first subband filter by applying the set of coefficients of the first subband filter to respective subbands of the first set of one or more subband sequences to produce the one or more filtered far-end subband sequences.

At the next operation 115, the apparatus 100 includes means, such as the processing circuitry 102 or the like, for processing the one or more filtered far-end subband sequences using a second subband filter to predict the second set of one or more subband sequences. In an example embodiment, the second subband filter includes an adaptive filter. The adaptive filter may be configured to implement an adaptive filtering algorithm. In one embodiment, the adaptive filtering algorithm is a NLMS algorithm. In one embodiment, the processing circuitry 102 is configured to convolve the first set of one or more subband sequences with the second subband filter to obtain a prediction of the second set of one or more subband sequences.

In an example embodiment, the processing circuitry 102 is also configured to apply another first subband filter, such as another fixed whitening filter, e.g., an IIR whitening filter, to a respective subband of the second set of one or more subband sequences to produce one or more filtered near-end subband sequences with a reduced time correlation. In this example embodiment, the processing circuitry 102 is also configured to process the one or more filtered far-end subband sequences using the second subband filter, e.g., the adaptive filter, to predict the one or more filtered near-end subband sequences.

In an example embodiment, the apparatus 100, such as the processing circuitry 102, is configured to switch between processing the first set of the subband sequence(s) with and without the first subband filter depending upon the current echo return loss enhancement levels and, in one embodiment, dependent upon a relationship of the current echo return loss enhancement levels to a threshold. In this example embodiment, the processing circuitry 102 is configured to process the first set of one or more subband sequences by the second subband filter without the application of the first subband filter in an instance in which a value associated with current echo return loss enhancement levels satisfies a first threshold, such as by being less than the first threshold. However, in an instance in which the value associated with current echo return loss enhancement fails to satisfy the first threshold, such as by exceeding the first threshold, the processing circuitry 102 is configured to apply the first subband filter in addition to the second subband filter in order to process the one or more filtered far-end subband sequences. The processing circuitry 102 of this example embodiment is configured to apply the first and second subband filters so long as the current echo return loss enhancement satisfies a second threshold, such as by exceeding the second threshold. In an example embodiment, the second threshold is less than the first threshold to create hysteresis and to avoid toggling too frequently between the different modes of operation, e.g., with and without the first subband filter. In an instance in which the echo return loss enhancement fails to satisfy the second threshold, such as by falling below the second threshold, the processing circuitry 102 of this example embodiment is configured to return to applying the second subband filter without application of the first subband filter.

At operation 116, the apparatus 100 includes means, such as the processing circuitry 102 or the like, for determining one or more subband error values by comparing the second set of one or more subband sequences to the prediction of the second set of one or more subband sequences produced by operation 115.

At operation 117, the apparatus 100 includes means, such as the processing circuitry 102 or the like, for determining a time domain error signal using the one or more subband error values. In one embodiment, the time domain error signal is calculated using a transformation, in addition to the one or more subband error values. This transformation may be an inverse of the Short-Time Fourier Transform that may be used in operation 112. This time domain error signal may be a final output of the echo cancellation system. As such, the echo cancellation system of an example embodiment may advantageously reduce echoes in the audio signals to a greater degree than in the past. In an example embodiment, the echo cancellation system may be part of a system similar to that of FIG. 1.

Figure 12 illustrates a flow chart depicting methods according to an example embodiment. It will be understood that each block of the flowchart may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 106 of an apparatus 100 employing an embodiment of the present disclosure and executed by processing circuitry 102. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

Many modifications and other embodiments of the inventions set forth herein will come to mind to one skilled in the art having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims.

Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Although a few variations have been described in detail above, other modifications or additions are possible. In particular, further features and/or variations may be provided in addition to those set forth herein. Moreover, the implementations described above may be directed to various combinations and sub-combinations of the disclosed features and/or combinations and sub-combinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

It should therefore again be emphasized that the various embodiments described herein are presented by way of illustrative example only and should not be construed as limiting the scope of the claims. For example, alternative embodiments can utilize different communication system configurations, user equipment configurations, base station configurations, identity request processes, messaging protocols and message formats than those described above in the context of the illustrative embodiments. These and numerous other alternative embodiments within the scope of the appended claims will be readily apparent to those skilled in the art.

**Claims**

1. A method for adaptive filtering with an adaptive filter, the method comprising:

   receiving an audio signal based on, at least in part, near-end signals and reproduced far-end signals, wherein the far-end signals are reproduced by one or more loudspeakers;
   obtaining a first set of one or more subband sequences based on the far-end signals;
   obtaining a second set of one or more subband sequences based on the near-end signals;
   applying a first subband filter comprising a set of coefficients to a respective subband of the first set of one or more subband sequences to produce one or more filtered far-end subband sequences with a reduced time correlation; and
   processing the one or more filtered far-end subband sequences using a second subband filter to predict the second set of one or more subband sequences, wherein the second subband filter comprises the adaptive filter.

2. A method as claimed in claim 1, wherein the coefficients of the first subband filter associated with a first subband of the first set of one or more subband sequences are different than the coefficients of the first subband filter associated with a second subband of the first set of one or more subband sequences.

3. A method as claimed in any of claim 1 or 2, wherein the first subband filter comprises an infinite impulse response whitening filter.

4. A method as claimed in any of claims 1 to 3, wherein the first and second sets of one or more subband sequences are obtained from the far-end signals and the near-end signals, respectively, using a Short-Time Fourier Transform.

5. A method as claimed in any of claims 1 to 4, wherein the coefficients of the first subband filter depend on an oversampling factor.

6. A method as claimed in any of claims 1 to 5, wherein the second subband filter is configured to implement a Normalized Least Mean Square algorithm.

7. A method as claimed in any of claims 1 to 6, wherein applying the first subband filter to the respective subband of the first set of one or more subband sequences further comprises:

   calculating a systematic correlation for the respective subband that occurs in an instance that the one or more far-end subband sequences have a specified correlation function;
   calculating the set of coefficients of the first subband filter that reduces the systematic correlation for the respective subband of the first set of one or more subband sequences; and
   applying the set of coefficients of the first subband filter to respective subbands of the first set of one or more subband sequences to produce the one or more filtered far-end subband sequences.

8.  A method as claimed in any of claims 1 to 7, wherein the one or more far-end signals comprise one or more loudspeaker input signals.

9.  A method as claimed in any of claims 1 to 8, wherein the set of coefficients are calculated using at least one of:

    one or more of an oversampling factor;
    a Fast Fourier Transform size used by a Short-Time Fourier Transform;
    a hop size used by the Short-Time Fourier Transform; or
    one or more coefficients of an analysis window used by the Short-Time Fourier Transform.

10. A method as claimed in any of claims 1 to 9, wherein applying the first subband filter to the respective subband of the first set of one or more subband sequences occurs in real-time.

11. A method as claimed in any of claims 1 to 10, further comprising:

    applying another first subband filter to a respective subband of the second set of one or more subband sequences to produce one or more filtered near-end subband sequences with a reduced time correlation; and
    processing the one or more filtered far-end subband sequences using the second subband filter to predict the one or more filtered near-end subband sequences.

12. A method as claimed in any of claims 1 to 11, further comprising processing the first set of one or more subband sequences by the second subband filter without the application of the first subband filter in an instance in which a value associated with current echo return loss enhancement levels satisfies a first threshold, wherein applying the first subband filter and processing the one or more filtered far-end subband sequences are dependent upon the value associated with current echo return loss enhancement satisfying a second threshold.

13. A method as claimed in any of claims 1 to 12, wherein obtaining the first set of one or more subband sequences comprises applying at least one filter to the one or more far-end signals.

14. A method as claimed in claim 13, further comprises downsampling a filtered representation of the one or more far-end signals to generate the first set of one or more subband sequences based on the far-end signals.

15. An apparatus configured to provide adaptive filtering with an adaptive filter, the apparatus comprising:

    at least one processor; and
    at least one memory including computer program code, the at least one memory and the computer program code configured to, with the at least one processor, cause the apparatus to perform at least the following:

        receive an audio signal based on, at least in part, near-end signals and reproduced far-end signals, wherein the far-end signals are reproduced by one or more loudspeakers;
        obtain a first set of one or more subband sequences based on the far-end signals;
        obtain a second set of one or more subband sequences based on the near-end signals;
        apply a first subband filter comprising a set of coefficients to a respective subband of the first set of one or more subband sequences to produce one or more filtered far-end subband sequences with a reduced time correlation; and
        process the one or more filtered far-end subband sequences using a second subband filter to predict the second set of one or more subband sequences, wherein the second subband filter comprises the adaptive filter.

100

101
FROM FAR-END

102
ECHO CANCELER $w_t$

103
LOUDSPEAKER SIGNALS $x_t$

107

104
NEAR-END USER

108

105
MIC SIGNALS $y_t$

NOISE

NEAR-END SIGNAL

FAR-END SIGNAL (ECHO)

106
TO FAR-END

FIGURE 1
(PRIOR ART)

FIGURE 2
(PRIOR ART)

FIGURE 3
(PRIOR ART)

FIGURE 4

FIGURE 5

600

601 $x_p^{(k)}$

**DELAY BUFFER 602**

| $x_p^{(k)}$ | $x_{p-1}^{(k)}$ | $x_{p-2}^{(k)}$ | ⋯ 801 | $x_{p-M+1}^{(k)}$ |

**MULTIPLY-ACCUMULATE UNIT 603**

**FIR FILTER COEFFICIENT MEMORY 604**

| $w_0^{(k)}$ | $w_1^{(k)}$ | $w_2^{(k)}$ | ⋯ | $w_{M-1}^{(k)}$ |

605 $\hat{y}_p^{(k)}$

# FIGURE 6
(PRIOR ART)

EP 4 332 963 A1

701
$x_p^{(k)}$

700

707
$\hat{y}_p^{(k)}$

708

$\tilde{x}_p^{(k)}$

$\tilde{x}_{p-1}^{(k)}$

$\tilde{x}_{p-2}^{(k)}$

$\cdots$

$\tilde{x}_{p-M+1}^{(k)}$

$v_1^{(k)}$

$v_2^{(k)}$

$w_0^{(k)}$

$w_1^{(k)}$

$w_2^{(k)}$

$\cdots$

$w_{M-1}^{(k)}$

IIR FILTER
COEFFICIENT
MEMORY
702

MULTIPLY-
ACCUMULATE
UNIT
703

DELAY
BUFFER
704

MULTIPLY-
ACCUMULATE
UNIT
705

FIR FILTER
COEFFICIENT
MEMORY
706

FIGURE 7

FIGURE 8

FIGURE 9

910

FIGURE 10A

FIGURE 10B

FIGURE 11

<u>110</u>                                                                                    111

RECEIVING AN AUDIO SIGNAL BASED ON NEAR-END SIGNALS AND ALSO BASED ON FAR-END SIGNALS REPRODUCED BY ONE OR MORE LOUDSPEAKERS

112

OBTAINING A FIRST SET OF ONE OR MORE SUBBAND SEQUENCES BASED ON THE FAR-END SIGNAL

113

OBTAINING A SECOND SET OF ONE OR MORE SUBBAND SEQUENCES BASED ON THE NEAR-END SIGNALS

114

APPLYING A FIRST SUBBAND FILTER COMPRISING A SET OF COEFFICIENTS TO A RESPECTIVE SUBBAND OF THE FIRST SET OF ONE OR MORE SUBBAND SEQUENCES TO PRODUCE ONE OR MORE FILTERED FAR-END SUBBAND SEQUENCES WITH A REDUCED TIME CORRELATION

115

PROCESSING THE ONE OR MORE FILTERED FAR-END SUBBAND SEQUENCES USING A SECOND SUBBAND FILTER THAT INCLUDES AN ADAPTIVE FILTER TO PREDICT THE SECOND SET OF ONE OR MORE SUBBAND SEQUENCES

116

CALCULATING ONE OR MORE SUBBAND ERROR VALUES BY COMPARING THE SECOND SET OF ONE OR MORE SUBBAND SEQUENCES TO THE PREDICTION OF THE SECOND SET OF ONE OR MORE SUBBAND SEQUENCES

117

CALCULATING A TIME DOMAIN ERROR SIGNAL USING THE ONE OR MORE SUBBAND ERROR VALUES

# FIGURE 12

Europäisches
Patentamt

European
Patent Office

Office européen
des brevets

# EUROPEAN SEARCH REPORT

**Application Number**

EP 23 19 0257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STRASSER FALCO ET AL: "Sub-band feedback cancellation with variable step sizes for music signals in hearing aids", 2014 IEEE INTERNATIONAL CONFERENCE ON ACOUSTICS, SPEECH AND SIGNAL PROCESSING (ICASSP), IEEE, 4 May 2014 (2014-05-04), pages 8207-8211, XP032617500, DOI: 10.1109/ICASSP.2014.6855201 [retrieved on 2014-07-11] * the whole document * | 1-15 | INV. G10L21/0232 H04M9/08 |
| A | CN 110 138 990 A (UNIV ZHEJIANG TECHNOLOGY) 16 August 2019 (2019-08-16) * the whole document * | 1-15 | |
| A | WO 00/72566 A1 (ERICSSON TELEFON AB L M [SE]) 30 November 2000 (2000-11-30) * the whole document * | 1,15 | |

**TECHNICAL FIELDS SEARCHED (IPC)**

G10L
H04Q
H04M

The present search report has been drawn up for all claims

| Place of search | Date of completion of the search | Examiner |
|---|---|---|
| Munich | 2 January 2024 | Sucher, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 0257

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2024

| Patent document cited in search report | | Publication date | Patent family member(s) | | Publication date |
|---|---|---|---|---|---|
| CN 110138990 | A | 16-08-2019 | NONE | | |
| WO 0072566 | A1 | 30-11-2000 | AU | 4566000 A | 12-12-2000 |
| | | | WO | 0072566 A1 | 30-11-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7783032 B

- CA 2410749